# FASCICULE DE BREVET EUROPEEN

(11) **EP 0 601 159 B1**
(45) Date de publication et mention de la délivrance du brevet: **19.03.1997**
(21) Numéro de dépôt: 93913132.2
(22) Date de dépôt: 15.06.1993
(51) Int. Cl.: B01D 61/16, C02F 1/44, B01D 17/04, C10M 175/06

(54) **PROCEDE D'ULTRAFILTRATION D'EMULSIONS STABILISEES**
VERFAHREN ZUR ULTRAFILTRATION VON STABILISIERTEN EMULSIONEN
PROCESS FOR ULTRAFILTRATION OF STABILIZED EMULSIONS

(30) Priorité: 16.06.1992 FR 9207262
(43) Date de publication de la demande: 15.06.1994
(73) Titulaire: ELF ANTAR FRANCE, 92400 Courbevoie (FR)
(72) Inventeur: AURELLE, Yves, F-31140 Aucamville (FR); BELKACEM, Mohamed, N, 17 El Harrach, Alger (DZ); HADJIEV, Dimitri, F-31000 Toulouse (FR); EDMOND, Julien, F-31240 Saint-Jean (FR); COTTERET, Jacques, F-69390 Millery (FR)
(74) Mandataire: Ohresser, François
(86) Numéro de dépôt international: FR9300577
(87) Numéro de publication internationale: WO9325298

(56) Documents cités:
- EP-A- 0 361 201
- DD-A- 138 603
- DE-A- 2 350 544
- DE-A- 2 528 990
- DE-A- 2 546 579
- FR-A- 2 218 125
- JOURNAL OF THE WATER POLLUTION CONTROL FEDERATION vol. 46, no. 9, Septembre 1974, WASHINGTON, US pages 2183 - 2192 R. L. GOLDSMITH ET. AL. 'Ultrafiltration of soluble oil wastes'
- WLB WASSER, LUFT UND BODEN vol. 33, no. 9, Septembre 1989, MAINZ, DE pages 19 - 24 R. SEDELIES ET. AL. 'Kombinatonsverfahren zur Emulsionsspaltung'

## Description

La présente invention se rapporte à un procédé d'ultrafiltration d'émulsions stabilisées, par exemple des huiles de coupe usagées, et plus particulièrement à un tel procédé consistant à introduire une faible quantité de sel dans l'émulsion, en vue de la déstabiliser, c'est-à-dire sans séparation préalable de l'eau et de l'huile avant son arrivée sur la membrane d'ultrafiltration.

Une huile de coupe est un mélange d'huile minérale, d'agents tensio-actifs, des cotensio-actifs et de nombreux additifs divers (bactéricides, agents extrême pression, agents d'onctuosité, agents anti-corrosion, agents mouillants, etc...). Cet ensemble de constituants émulsifiables en toutes proportions avec l'eau est couramment utilisé à des concentrations variant de 1 à 10 % d'huile pour 90 à 99 % d'eau. Les émulsions d'huile de coupe sont employées dans toutes les opérations d'usinage, de mise en forme de métaux et sciage de pierres pour assurer au niveau de l'outil de coupe les fonctions suivantes :
- lubrification et réduction des frottements,
- refroidissement,
- diminution de l'usure et de la corrosion,
- évacuation des impuretés (copeaux, poussières...)

Ces émulsions travaillent en circuit fermé sur les machines-outils jusqu'à ce qu'elles perdent leur efficacité au fil des mois à cause d'une lente dégradation bactérienne et du fait de leur contamination avec des impuretés. Aussi, périodiquement, il est nécessaire de procéder à leur remplacement. La pollution organique occasionnée par un rejet direct de ces émulsions usées dans les milieux naturels peut être dommageable pour l'environnement. Il se pose donc le problème du traitement de ces émulsions d'huiles de coupe usagées.

Les émulsions stabilisées ne peuvent pas être traitées par les procédés classiques de séparation utilisés pour les émulsions non stabilisées à savoir : la décantation, la flottation, la coalescence à lit granulaire ou fibreux ou les hydrocyclones, car les gouttelettes d'huile sont trop petites pour pouvoir se séparer par décantation. De plus, la présence des agents tensio-actifs et des cotensio-actifs s'oppose à toute coalescence entre les gouttelettes d'huile du fait de l'existence d'une barrière électrique et/ou mécanique.

Les techniques de traitement actuellement utilisées peuvent être classées en trois catégories :
- Les procédés de traitement par voie thermique : On distingue deux types de traitement, le plus simple consiste en une combustion directe de l'émulsion usagée, l'autre type est basé sur une évaporation. La phase aqueuse est ainsi évaporée et l'huile est récupérée en fin d'opération. Ces deux techniques s'adaptent à tous les types de fluide de coupe mais présentent un inconvénient majeur à savoir une consommation d'énergie très importante.
- Les procédés de traitement physico-chimiques : Ces procédés sont basés sur une déstabilisation de l'émulsion usagée huile-eau qui est souvent appelée "cassage de l'émulsion". Ce cassage est généralement obtenu par action de réactifs chimiques du type acides, sels ou polyélectrolytes, la séparation ultérieure de l'eau et de l'huile est en général réalisée par décantation simple. Un exemple de ce type de procédé de cassage est décrit dans le document FR-A-2656812. Bien que conduisant à de bons rendements de séparation après des temps de décantation assez longs, ces procédés présentent deux inconvénients majeurs.
   Le premier inconvénient est lié aux quantités importantes de réactifs à utiliser qui se traduit par la substitution d'une pollution acide ou saline à une pollution initiale organique. Le deuxième inconvénient majeur de ces techniques c'est que le cassage est comparable à une réaction chimique et s'avère donc stoechiométrique, c'est-à-dire qu'il nécessite un dosage optimal des réactifs utilisés. Il est donc indispensable de réaliser des tests comme lors d'une floculation afin de déterminer au préalable les concentrations optimales de sels, d'acides ou de polyélectrolytes à utiliser.
- les procédés par ultrafiltration :
   Afin de séparer l'huile de l'eau par ultrafiltration, on fait circuler l'émulsion contenant des gouttelettes d'huile de coupe de diamètre inférieur à 5 µ, dans un ultrafiltre équipé d'une membrane poreuse perméable à l'eau dont les pores ont un diamètre d'environ 100 Å.
   Les procédés de traitement par ultrafiltration présentent des avantages certains. Ils ne consomment que peu d'énergie, la taille des installations de traitement est réduite et l'eau après traitement est exempte d'huile de coupe. De plus, aucune maintenance humaine n'est requise en continu comme pour les procédés physico-chimiques et de ce fait, ils s'automatisent facilement, ce qui, dans le contexte actuel, est un avantage considérable.
   Cependant, cette technique par ultrafiltration comporte des limitations liées notamment à la viscosité de l'émulsion qui va directement influer sur le flux de perméat, et à la formation au cours du temps d'une couche dite "de polarisation" sur la membrane obtenue par l'accumulation progressive des gouttelettes d'huile. Cette couche, lorsqu'elle contient de 30 à 40% d'huile, a la consistance d'un gel blanchâtre particulièrement visqueux. Le colmatage ainsi obtenu provoque une diminution très sensible de la perméabilité à l'eau de la membrane, c'est-à-dire une diminution du flux de perméat la traversant et la suppression de l'effet de séparation capillaire au niveau des zones colmatés de la membrane, ce qui se traduit par une fuite d'huile et une mauvaise séparation huile-eau.
   Pour pallier à cet inconvénient majeur de la technique de l'ultrafiltration, il est connu d'abaisser la viscosité de l'émulsion soit en la diluant, soit en cassant totalement ou partiellement l'émulsion par introduction de sels, de composés organiques ou d'acides ou par simple dilution de l'émulsion. Dans la technique antérieure, cette déstabilisation chimique s'accompagne d'une décantation antérieur ou postérieur à l'ultrafiltration (FR.2.298.125). Ce type de déstabilisation préliminaire à l'ultrafiltration consiste à traiter deux phases distinctes, l'huile préalablement séparée et l'émulsion résiduelle à ultrafiltrer dont on a ainsi diminué la viscosité.

Ces améliorations de la technique antérieure pour la séparation des émulsions stables par ultrafiltration ne permettent pas néanmoins de développer à l'échelle industrielle de façon économique ces procédés d'ultrafiltration puisque deux étapes, dont l'une de déstabilisation par cassage de l'émulsion, sont nécessaires pour améliorer le flux de perméat au travers de la membrane. En outre, on substitue à une pollution huileuse une pollution saline importante pour laquelle aucune solution favorable n'est disponible. De plus, une surveillance humaine est nécessaire, et ce type de procédé ne peut être que partiellement automatisé.

La présente invention vise donc à améliorer les procédés d'ultrafiltration par membrane afin d'améliorer leurs performances, c'est-à-dire augmenter le flux de perméat, limiter ces problèmes de colmatage et de formation de couche de polarisation, et réduire les surfaces membranaires actuellement mises en oeuvre, mais cela en une seule étape, sans déstabilisation préalable par cassage de l'émulsion en deux phases "huile" et "émulsion de viscosité réduite".

La présente invention a donc pour objet un procédé d'ultrafiltration d'émulsions stabilisées "huile dans l'eau", consistant à faire circuler l'émulsion au travers d'une chambre délimitée en partie par une membrane poreuse caractérisée en ce qu'on introduit dans l'émulsion, avant son entrée dans ladite chambre, une faible quantité de sel correspondant à un rapport pondéral de la quantité de sel en g/l sur le pourcentage en poids d'huile contenue dans l'émulsion compris entre 0,01 et 0,2.

Parmi les sels convenant au procédé selon l'invention, on peut trouver les halogènes et les formiates de métaux alcalino-terreux. Dans un mode préféré de l'invention, on préférera les halogénures et les formiates de calcium et de magnésium.

Néanmoins, le sel préféré, le plus courant et le moins coûteux, est le chlorure de calcium.

Pour mettre en oeuvre le procédé selon l'invention, la concentration en chlorure de calcium dans l'émulsion sera choisie comprise entre 0,1 et 1Kg/m³.

L'avantage du procédé selon l'invention réside dans le fait que, contrairement à ce que fait l'Homme du métier, on n'introduit qu'une faible quantité de sel, au maximum dix fois plus faible que celle nécessaire pour provoquer une déstabilisation avec cassure de l'émulsion en huile et émulsion diluée. Dans ledit procédé de l'invention, il n'y a aucune cassure de l'émulsion avant ou dans la chambre de séparation. En conséquence, aucun film d'huile ne se dépose à la surface de la membrane et donc aucun gel de polarisation ne se forme. On transforme ainsi la membrane en coalesceur de surface qui permet la séparation en continu de l'huile coalescée à la surface de la membrane. La quantité d'huile séparée correspond stoechiométriquement à la quantité d'huile contenue dans l'ultrafiltrat récupéré et coalescée sur ladite membrane. De ce fait, la concentration en huile dans le circuit de concentration de l'ultrafiltrat reste constante et faible, contrairement à celles décrites dans l'état de la technique, ce qui, compte tenu de la faible viscosité du milieu, favorise l'obtention de débits de perméat élevés.

Une explication du phénomène mis en oeuvre par l'invention consisterait à dire que la présence d'une faible concentration de sel favorise simultanément la séparation des micro-gouttelettes et de l'eau constituant l'émulsion et leur coalescence au niveau de la membrane sous l'effet conjugué de la pression du flux et des forces hydrodynamiques, le sel restant piégé par la membrane. Dans ce procédé, aucune pollution, qu'elle soit saline ou huileuse, n'est possible ce qui présente de gros avantages comparés aux techniques développées par l'Homme du métier. Ainsi, l'eau récupérée ne présente qu'une faible dureté, et est comparable à certaines eaux de surfaces répondant aux normes de potabilité requise.

L'invention sera maintenant décrite à titre d'exemple non limitatif en se référant aux dessins annexés sur lesquels :
- la figure 1 est une vue schématique d'un ensemble d'ultrafiltration permettant la mise en oeuvre du procédé selon l'invention ;
- la figure 2 est une vue schématique d'une cellule de laboratoire permettant de faire des essais d'ultrafiltration ;
- la figure 3 est un graphique de l'évolution du débit d'ultrafiltrat en fonction du temps réalisé avec la cellule de la figure 2 ;
- la figure 4 est un graphique du rapport Q/Qo en fonction de la concentration de CaCl₂ ;
- la figure 5 est un graphique de l'évolution du débit en fonction de la pression ; et
- la figure 6 est un graphique de l'évolution du débit d'ultrafiltrat en fonction du temps réalisé avec l'ensemble de la figure 1.

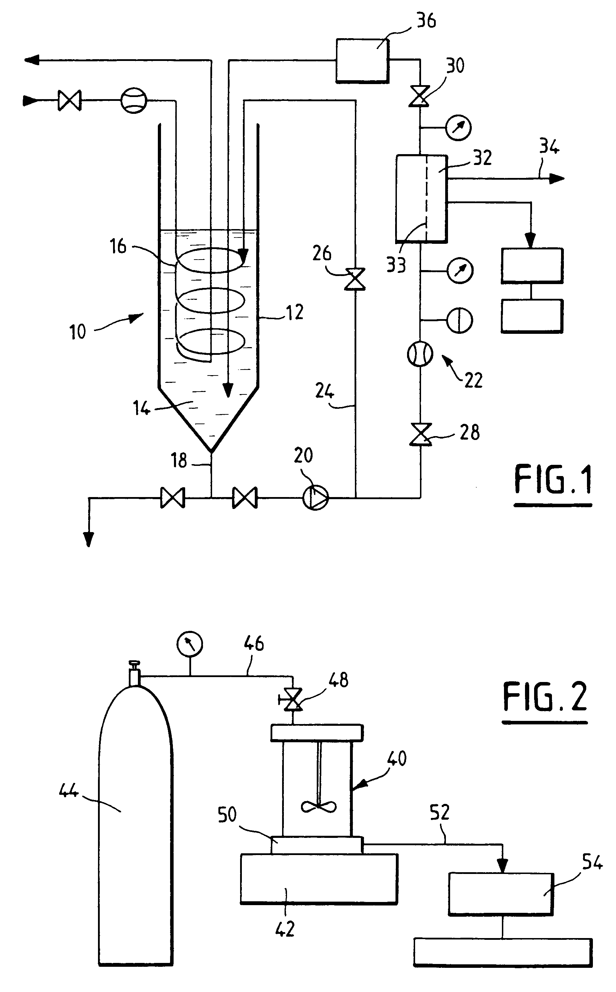

Sur la figure 1 est représenté un ensemble d'ultrafiltration 10 comprenant un bac 12 destiné à contenir l'émulsion 14 à traiter et muni d'un circuit de refroidissement 16. Le bac 12 comporte une sortie 18 qui est reliée, par l'intermédiaire d'une pompe centrifuge 20 à un circuit de filtration 22. Un circuit secondaire 24, muni d'une vanne 26, est disposé entre la pompe 20 et le bac 12 et permet de contrôler le passage de fluide par le circuit de filtration 22.

Le circuit de filtration 22 comprend deux vannes 28 et 30 disposées en amont et en aval d'une cellule d'ultrafiltration, munie d'une membrane 33, qui comporte une sortie de filtrat 34. Le circuit de filtration 22 comprend, de plus, un séparateur 36 en aval de la cellule d'ultrafiltration 32. Lors de la mise en oeuvre de l'ensemble d'ultrafiltration, le fluide à traiter circule à travers la cellule 32, parallèle à la membrane 33, à une vitesse élevée.

Dans le premier mode de réalisation de l'invention, afin de déstabiliser l'émulsion, le procédé d'ultrafiltration consiste à ajouter dans l'émulsion de faibles quantités d'un sel avant son entrée dans la cellule 32. De préférence, le sel est du CaCl₂.

Afin d'étudier l'influence de l'ajout du CaCl₂ sur le débit d'ultrafiltrat, des essais ont été menés à différentes concentrations en sel pour une émulsion à 4 % en huile. La concentration en sel est exprimée en mg de sel ajoutés à un litre d'émulsion.

Ces essais ont été réalisés avec la cellule de laboratoire représentée sur la figure 2. Cette cellule, qui est du type "Amicon", est représentée généralement en 40 et comporte un agitateur 42. De l'air sous pression est envoyé d'un réservoir 44 vers l'intérieur de la cellule 40 par l'intermédiaire d'un conduit 46 qui est muni d'une vanne 48. Comme dans l'exemple de l'ensemble d'ultrafiltration de la figure 1 la cellule 40 est munie d'une membrane 50. L'ultrafiltrat passe par un conduit 52 vers une balance 54.

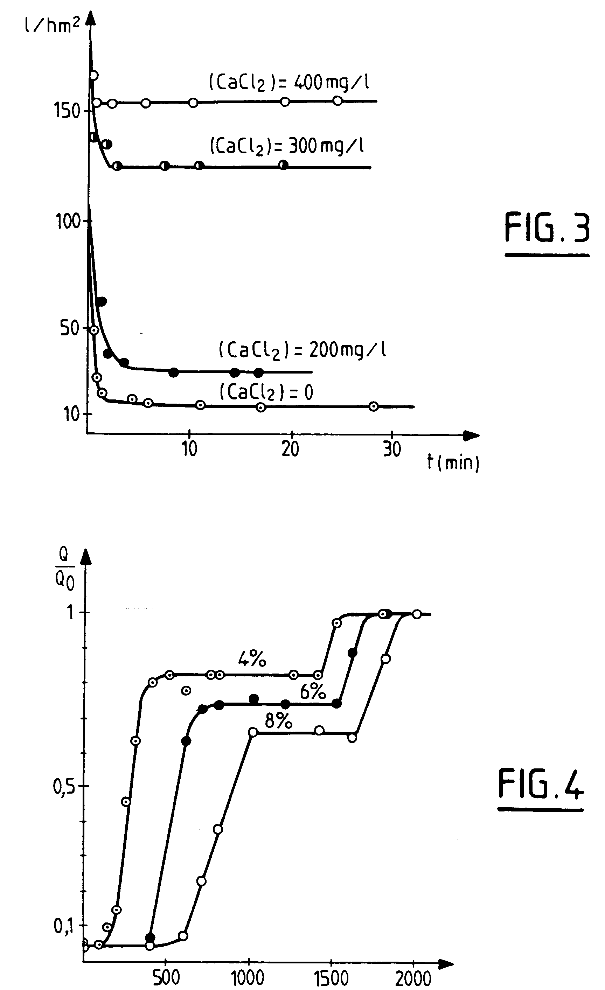

La figure 3 montre l'évolution du débit d'ultrafiltrat en fonction du temps pour différentes concentrations de CaCl₂. Les résultats présentés sur la figure 3 ont été réalisés avec la cellule de la figure 2 et montrent une nette amélioration du flux d'ultrafiltrat pour des concentrations en sel supérieures à 300 mg/l. En fin d'opération, de l'huile libre flotte à la surface du rétentat.

Bien que la couche de polarisation ne soit pas complètement éliminée, les effets de celle-ci s'atténuent au fur et à mesure que la concentration en sel augmente. Le chlorure de calcium a pour effet la diminution du potentiel entre des gouttelettes d'huile, de ce fait, au fur et à mesure que l'eau traverse la membrane, les gouttelettes d'huile qui se concentrent au niveau de celle-ci, coalescent et se séparent de l'émulsion. Cette huile libre remonte à la surface, ce qui déstabilise la couche de polarisation et empêche toute formation de gel.

Sur la figure 4 est reportée la variation du rapport, débit d'ultrafiltrat sur le débit de l'eau pure sous 1 bar et 20°C, Q/Qo, en fonction de la concentration en chlorure de calcium pour différentes concentrations en huile. Ces essais ont également été réalisés avec la cellule de la figure 2. Pour chaque courbe, on distingue trois paliers : Sur le premier palier, le débit reste égal à celui obtenu sans ajout de sel. On observe ensuite une augmentation brusque du débit jusqu'au deuxième palier, l'émulsion est alors partiellement déstabilisée, mais aucune séparation huile-eau n'est observée ; à l'établissement de ce palier correspond la concentration optimale en sel. Sur le troisième palier, le débit d'ultrafiltrat est égal à celui de l'eau pure, la concentration en sel correspondant à ce palier est égale à la quantité nécessaire pour un cassage total donné par la littérature.

| | | | |
|---|---|---|---|
| [Huile] (%) | 4 | 6 | 8 |
| [CaCl₂] opt. (g/l) | 0,5 | 0,75 | 1 |
| [CaCl₂]/[Huile] | 0,125 | 0,125 | 0,125 |
| Q(i) | 159 | 130 | 125 |

Le tableau résume les résultats obtenus. La quantité en sel nécessaire augmente avec la concentration de l'émulsion en huile mais reste bien en dessous des quantités utilisées pour déstabiliser par voie physico-chimique les émulsions traitées. Dans tous les cas, le débit de perméat est relativement élevé par rapport à celui obtenu sans déstabilisation. Le rapport quantité (g/l) de sel optimale sur concentration (% en poids) en huile est constant, ceci permet de déterminer pour toute émulsion à traiter la quantité de sel nécessaire pour opérer dans les conditions optimales d'ultrafiltration.

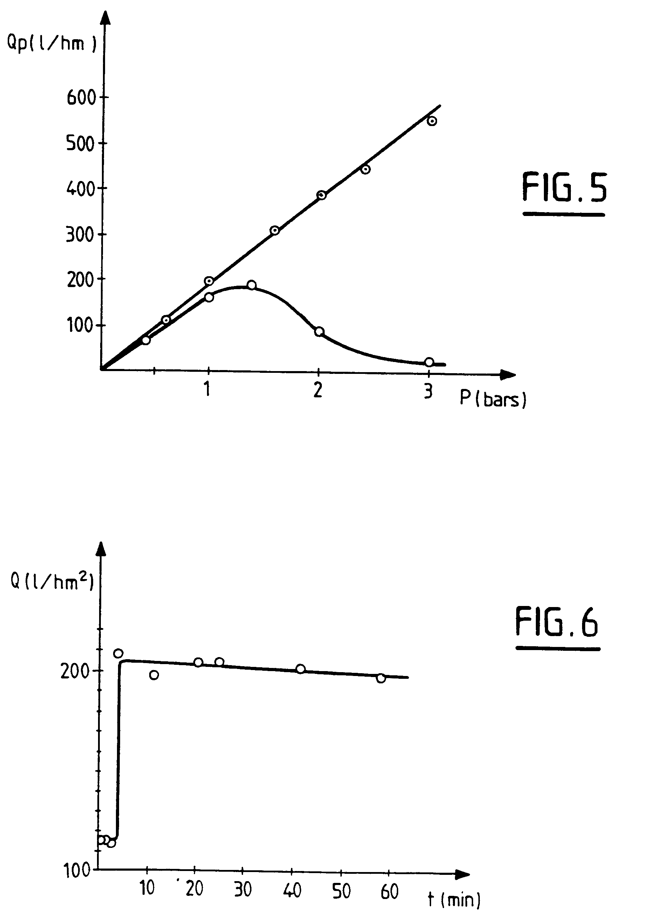

L'influence de la pression sur le débit d'ultrafiltrat pour une émulsion à 4 % en huile et une concentration en sel de 400 mg/l est représentée sur la figure 5 et a été étudiée avec la cellule de la figure 2. Jusqu'à 1,4 bars, le flux de perméat augmente avec la pression ; on observe ensuite une diminution du flux pour des pressions supérieures. Au-delà de 3 bars, le flux devient égal au flux obtenu par une ultrafiltration classique.

La figure 6 représente l'évolution du débit d'ultrafiltrat en fonction du temps pour une émulsion d'huile à 4 %. Ces essais ont été réalisés avec l'ensemble d'ultrafiltration de la figure 1. A 10 litres d'émulsion, 5 g de CaCl₂ ont été ajoutés après 4 minutes d'ultrafiltration. Comme on le voit sur le graphique, le débit d'ultrafiltrat augmente instantanément de 115 à 210 l/hm² et reste, ensuite, pratiquement constant.

Avec ce procédé, la pollution résiduelle est minimale car les quantités de sel ajoutées sont très faibles.

## Revendications

1. Procédé d'ultrafiltration d'émulsions stabilisées "huile dans l'eau", consistant à faire circuler l'émulsion au travers d'une chambre délimitée en partie par une membrane poreuse, caractérisé en ce qu'on introduit dans l'émulsion, avant son entrée dans ladite chambre, une faible quantité de sel correspondant à un rapport pondéral de la quantité de sel en g/l sur le pourcentage en poids d'huile contenue dans l'émulsion compris entre 0,01 et 0,2.

2. Procédé selon la revendication 1, caractérisé en ce que le sel est choisi dans le groupe constitué par les halogénures et les formiates de métaux alcalino-terreux, et de préférence parmi les halogénures et les formiates de calcium et de magnésium.

3. Procédé selon l'une des revendications 1 et 2, caractérisé en ce que le sel est le chlorure de calcium, et en ce que la concentration en chlorure de calcium nécessaire dans l'émulsion est comprise entre 0,1 et 1kg/m^{3.}

## Claims

1. Method for the ultrafiltration of stabilized "oil in water" emulsions, consisting in circulating the emulsion through a chamber delimited partially by a porous membrane, characterized in that a small quantity of salt corresponding to a ratio by weight of the quantity of salt in g/l to the percentage by weight of oil contained in the emulsion of between 0.01 and 0.2 is introduced into the emulsion before it enters the said chamber.

2. Method according to Claim 1, characterized in that the salt is selected from the group constituted by alkaline-earth metal halides and formates and preferably from calcium and magnesium halides and formates.

3. Method according to any one of Claims 1 and 2, characterized in that the salt is calcium chloride, and in that the concentration of calcium chloride necessary in the emulsion is between 0.1 and 1 kg/m³.

## Patentansprüche

1. Ultrafiltrationsverfahren für stablisierte "Öl-in-Wasser"-Emulsionen, welches darin besteht, die Emulsion durch eine Kammer zirkulieren zu lassen, die teilweise von einer porösen Membran begrenzt ist, dadurch gekennzeichnet, daß der Emulsion vor ihrem Eintritt in die Kammer eine geringe Menge Salz zugeführt wird, die einem Gewichtsverhältnis zwischen der Salzmenge in g/l und dem Gewichtsprozentanteil des in der Emulsion enthaltenen Öles zwischen 0,01 und 0,2 entspricht.

2. Verfahren nach Anspruch 1, dadurch gekennzeichnet, daß das Salz aus der aus Erdalkalimetallhalogeniden und -formiaten bestehenden Gruppe und vorzugsweise aus Calcium- und Magnesiumhalogeniden und -formiaten ausgewählt wird.

3. Verfahren nach einem der Ansprüche 1 und 2, dadurch gekennzeichnet, daß das Salz Calciumchlorid ist und daß die in der Emulsion erforderliche Calciumchlorid-Konzentration zwischen 0,1 und 1 kg/m³ beträgt.
